# EUROPÄISCHE PATENTSCHRIFT

(11) **EP 2 839 478 B1**
(45) Veröffentlichungstag und Bekanntmachung des Hinweises auf die Patenterteilung: **20.04.2016**
(21) Anmeldenummer: 13708692.2
(22) Anmeldetag: 06.02.2013
(51) Int. Cl.: G21C 15/02

(54) **SPEISEWASSERVERTEILSYSTEM FÜR EIN KERNKRAFTWERK UND VERFAHREN ZUM BETREIBEN EINES KERNKRAFTWERKS**
FEED WATER DISTRIBUTING SYSTEM FOR A NUCLEAR POWER PLANT, AND METHOD FOR OPERATING A NUCLEAR POWER PLANT
SYSTÈME DE DISTRIBUTION D'EAU D'ALIMENTATION POUR UNE CENTRALE NUCLÉAIRE ET PROCÉDÉ D'EXPLOITATION D'UNE CENTRALE NUCLÉAIRE

(30) Priorität: 16.04.2012 DE 102012007411
(43) Veröffentlichungstag der Anmeldung: 25.02.2015
(73) Patentinhaber: AREVA GmbH, 91052 Erlangen (DE)
(72) Erfinder: LEMM, Andreas, 90427 Nürnberg (DE); SCHRAMM, Konrad, 91056 Erlangen (DE)
(74) Vertreter: Kugler, Jörg
(86) Internationale Anmeldenummer: PCT/EP2013/052324
(87) Internationale Veröffentlichungsnummer: WO 2013/156171

(56) Entgegenhaltungen:
- US-A- 3 700 552
- US-A- 4 412 969
- US-A- 4 664 069

## Beschreibung

Die Erfindung bezieht sich auf ein Speisewasserverteilsystem für ein Kernkraftwerk bestehend aus zumindest zwei innerhalb eines Reaktordruckbehälters angeordneten Speisewasserverteilern und auf ein Verfahren zum Betreiben eines Kernkraftwerks. Sie bezieht sich ferner auf ein Kernkraftwerk.

In einem Kernkraftwerk wird in einem Reaktorkern, der sich in einem Reaktordruckbehälter befindet, durch kontrollierte Kernspaltung Wärme erzeugt. Mit dieser Wärme wird ein Kühlmittel erhitzt, das durch den Reaktorkern gepumpt wird und dadurch die Energie aus dem Reaktorkern und dem Reaktordruckbehälter abtransportiert. Auf Grund der für Menschen gefährlichen Radioaktivität befinden sich zusätzlich zu dem Reaktordruckbehälter in der Regel weitere Abschirmungen bzw. Schutzschilder in dem Kernkraftwerk, um den Großteil radioaktiver Strahlung zu absorbieren.

Es existieren verschiedene Reaktortypen, die sich hinsichtlich Kernbrennstoff, Kühlkreislauf und Modulator unterscheiden.

Bei Siedewasserreaktoren, die zu den Leichtwasserreaktoren gehören, existiert ein einziger Dampf-Wasser-Kreislauf im Gegensatz zu Druckwasserreaktoren, bei denen es einen separaten Primär- und einen Sekundärkreislauf gibt. In der Regel wird in Siedewasserreaktoren vorgewärmtes Wasser in den Reaktordruckbehälter gepumpt. Durch die dort entstehende Wärme wird das Wasser als Dampf aus dem Reaktordruckbehälter geleitet und treibt dort eine oder mehreren Turbinen an und kondensiert aus. Anschließend wird es mittels Pumpen zurück in den Reaktordruckbehälter gespeist. In der Regel ist vor der Einspeisung ein Speisewasserbehälter, in dem das Fluid zwecks Temperatur- und/oder Druckausgleich zunächst gesammelt wird, vorgeschaltet. In den meisten Fällen durchläuft das Wasser vor der Einspeisung zudem einen Vorwärmer, um die Temperatur des kondensierten Wassers der Temperatur im Reaktordruckbehälter anzunähern.

Für das Verteilen des Wassers im Reaktordruckbehälter selbst ist ein Speisewasserverteilsystem, kurz System, mit einem Speisewasserverteiler vorgesehen. In einem im Hause der Anmelderin gebräuchlichen System besteht der Speisewasserverteiler aus genau einem ringförmigen Hauptkörper, der in zwei oder vier hohle Teilsegmente unterteilt ist. Im Fall von vier Teilsegmenten, reicht jedes der Teilsegmente im Wesentlichen über einen Viertelkreis und ist strömungsmäßig mit jeweils einem Einspeisestutzen und mehreren Auslassdüsen verbunden. Die Einspeisestutzen sind in der Regel symmetrisch verteilt, so dass jeweils zwei Einspeisestutzen gegenüberliegend im Reaktordruckbehälter angeordnet sind. Bei vier Einspeisestutzen bildet sich somit ein kreuzförmiges Muster aus. Die zwei oder vier Teilsegmente des Speisewasserverteilers werden durch die gleiche Anzahl an Speiseleitungen mit Wasser gefüllt, wobei jede dieser Speiseleitungen und somit die Teilsegmente des Speisewasserverteilers separat zuschaltbar sind. Neben der Verwendung von Wasser im Reaktor sind auch andere Fluide denkbar, die durch den Speisewasserverteiler in den Reaktordruckbehälter eingespeist werden. Der Begriff "Speisewasser" ist daher im Folgenden weit auszulegen und umfasst auch derartige Fälle.

Das Speisewasserverteilsystem soll für eine hinreichend hohe Menge an zugeführtem Speisewasser im Reaktordruckbehälter sorgen, so dass sich unter anderem auch auf Grund des dort herrschenden Drucks ein Kreislauf einstellt und Reaktorwärme abgeführt werden kann.

Da der im Hause der Anmelderin gebräuchliche Speisewasserverteiler für einen Volllastbetrieb ausgelegt ist, sind die Größen von Speiseleitungen, Einfüllstutzen und Hauptkörper etc., so gewählt, dass bei Volllastbetrieb ein geeignetes Bespeisen des Reaktordruckbehälters stattfindet. Bei einem Teillastbetrieb und beim Anfahren des Kernreaktors ist der Reaktor allerdings mit einem geringeren Durchsatz an Speisewasser zu versorgen. Da für die geeignete Nutzung eines Speisewasserverteilers unter anderem ein Mindestdruck in diesem vorherrschen muss, werden in einem solchen Fall die Speiseleitungen nur teilweise genutzt, wobei dies durch aktive Ansteuerung oder durch passive Bauteile geschehen kann. Wird beispielsweise nur eine der vorhandenen Speiseleitungen und somit auch nur eines der Teilsegmente von dem Fluid durchströmt, so bedeutet dies aber auch, dass auf Grund der ringförmigen Anordnung das Fluid nicht mehr gleichmäßig, sondern unsymmetrisch im Reaktordruckbehälter verteilt wird.

Eine unsymmetrische Bespeisung ist mit schwerwiegenden Nachteilen verbunden. Einerseits können zwischen direkt bespeisten und nicht bespeisten Stellen im Reaktordruckbehälter hohe Temperaturdifferenzen auftreten, die zu Materialermüdungen und -brüchen, insbesondere in der Innenwand des Reaktordruckbehälters, führen können. Andererseits kann eine ungleichmäßige Bespeisung auch dazu führen, dass Teile der Reaktorwärme verzögert abgeführt werden, so dass zum Einen Effizienzverluste zu erwarten sind und zum Anderen zu hohe, absolute Temperaturen in Teilbereichen des Reaktordruckbehälters auftreten können. Auch bei Überlastungen des Kernreaktors, die unter anderem bei drohenden Kernschmelzen auftreten können, ist ein solches System mit Nachteilen behaftet, da die Größenverhältnisse für diesen Fall nur bedingt ausgelegt sind, so dass in der Regel zusätzliche Notkühlelemente genutzt werden. Ein weiterer Nachteil ist das Fehlen einer echten Redundanz. Beispielsweise ist bei Ausfall einer Einspeiseleitung und/oder eines Speisewasserverteilers die Bespeisung des Reaktorkerns mit Speisewasser bis zum Beheben des Defekts dauerhaft ungleichmäßig.

Der Erfindung liegt daher die Aufgabe zugrunde, ein Speisewasserverteilsystem anzugeben, welches einerseits beim Anfahren und im Teilllastbetrieb eine gleichmäßige Verteilung des Speisewassers bei geringeren mechanischen Belastungen bereitstellt und andererseits unter Wahrung der in Kernkraftwerken üblichen Sicherheit eine Redundanz der einzelnen Komponenten aufweist. Weiterhin soll ein unter Nutzung eines derartigen Speisewasserverteilsystems besonders geeignetes Verfahren zum Betreiben eines Kernkraftwerks angegeben werden.

Bezüglich des Speisewasserverteilsystems wird diese Aufgabe erfindungsgemäß gelöst, indem jeder Speisewasserverteiler
- genau einen ringförmigen Hauptkörper mit einem innenliegenden Kanal aufweist,
- zumindest einen Einfüllstutzen, der strömungsmäßig mit dem innenliegenden Kanal über zumindest eine Einfüllöffnung verbunden ist, aufweist und
- eine Vielzahl von Auslassdüsen, die strömungsmäßig mit dem innenliegenden Kanal verbunden sind, aufweist,
und jeder der Einfüllstutzen eines Speisewasserverteilers strömungsmäßig mit jeder Auslassdüse dieses Speisewasserverteilers verbunden ist.

Vorteilhafte Ausgestaltungen sind Gegenstand der Unteransprüche.

Die Erfindung geht von der Überlegung aus, dass beim Anfahren und bei einem Teilllastbetrieb eine geringere Menge an Speisewasser notwendig ist als beim Volllastbetrieb. Zudem ist bei Teilausfällen des Speisewassersystems die Bespeisung des Reaktorkerns aufrechtzuerhalten und das Speisewasser sollte möglichst gleichmäßig im Reaktordruckbehälter verteilt werden. Die einzelnen Teilsegmente eines bisher gebräuchlichen Speisewassersystems, welches in einem Speisewasserverteiler mehrere voneinander getrennte Hohlkörper aufweist, sind so ausgelegt, dass diese einen bestimmten Fluiddurchsatz und bestimmten Druck benötigen. Beispielsweise ist beim Anfahren des Reaktors der Speisewasserbedarf aber geringer, so dass regelmäßig nur einzelne Teilsegmente genutzt werden. Auf Grund der unterschiedlichen Temperaturen in den Teilsegmenten, die auch Resultat des unsymmetrischen Füllens sind, können mechanische Belastungen auftreten, die auch die Bildung von Rissen begünstigen können.

Erfindungsgemäß wurde erkannt, dass ein Speisewasserverteiler auch aus einem durchgängigen hohlen Hauptkörper eines Speisewasserverteilers bestehen kann, bei dem sämtliche Auslassdüsen strömungsmäßig mit dem oder den Einfüllstutzen verbunden sind. Hierdurch kann durch einen einzigen Speisewasserverteiler eine gleichmäßig, symmetrische Bespeisung des Reaktorkerns stattfinden. Bei einer gezielten Ausgestaltung eines Speisewasserverteilers kann dieser so ausgelegt werden, dass er für einen Teilllastbetrieb geeignet ist. Da die Menge an Speisewasser bei Volllastbetrieb größer ist, ist es vorgesehen, dass das Speisewasserverteilsystem aus mindestens zwei solchen Speisewasserverteilern besteht. Beim Anfahren oder im Teilllastbetrieb reicht somit ein Speisewasserverteiler aus, der das Speisewasser symmetrisch verteilt. Da dieser einen durchgehenden innenliegenden Kanal aufweist, wird auch eine unsymmetrische Wärmeverteilung bedingt durch das zugeführte Speisewasser im Speisewasserverteiler selbst vermieden, wodurch geringere mechanische Belastungen auftreten können. Ein zweiter Speisewasserverteiler wird bei einem höheren Bedarf an Speisewasser aktiv oder passiv zugeschaltet und bespeist ebenfalls homogen. Auch ist es bei einem über den normalen Volllastbetrieb hinausgehenden Bedarf an Speisewasser denkbar, dass über die Anzahl an Speisewasserverteilern, die für den Volllastbetrieb vorgesehen sind, weitere Speisewasserverteiler hinzuzuschalten, so dass eine Bespeisung für Notfälle geschaffen werden kann, bei denen eine über den Kühlbedarf im Volllastbetrieb hinausgehende Kühlung notwendig wird. Auf Grund der gezielten Auslegung des Speisewasserverteilsystems mit mehreren Speisewasserverteilern, die unabhängig voneinander gefüllt werden und jeder für sich eine homogene Bespeisung vollziehen, ist auch eine Redundanz des Systems gegeben, die ein Weiterbetreiben des Kernkraftwerks bei Teilausfällen oder Havarien unterstützt.

Um eine besonders homogene Verteilung des Speisewassers zu erzielen, ist es in vorteilhafter Ausgestaltung vorgesehen, dass die Auslassdüsen in Umfangrichtung gesehen gleichmäßig über den Hauptkörper des jeweiligen Speisewasserverteilers verteilt sind.

Für eine homogene Bespeisung eines gebräuchlichen Reaktordruckbehälters in Siedewasserreaktoren weist jeder Speisewasserverteiler in vorteilhafter Ausgestaltung zwischen vierzig und fünfzig Auslassdüsen auf, da hierdurch unter anderem die Eigenschaften der Auslassdüsen und eines gebräuchlichen Reaktordruckbehälters berücksichtigt werden.

Um eine möglichst hohe Stabilität eines Speisewasserverteilers zu erzielen, weist in vorteilhafter Ausgestaltung der Hauptkörper jedes Speisewasserverteilers im Wesentlichen einen kreisförmigen Querschnitt auf. So wird in der Regel mit einem kreisförmigen Querschnitt eine hohe Stabilität verbunden. Zudem ist die Außenfläche des Speisewasserverteilers, die mit dem Dampf im Reaktordruckbehälter in Kontakt steht, klein gegenüber vielen anderen Bauformen, so dass eine thermische Belastung des Speisewasserverteilers gering gehalten wird.

Für eine redundante Auslegung des Systems, bei der jeder Speisewasserverteiler homogen den Reaktordruckbehälter bespeist, ist in vorteilhafter Ausgestaltung vorgesehen, dass die Hauptkörper der Speisewasserverteiler übereinander angeordnet sind. Hierdurch decken diese im Wesentlichen den gleichen Bereich des Reaktordruckbehälters ab, so dass bei Ausfall eines Speisewasserverteilers ein anderer dessen Rolle übernehmen kann. Auch ist beim Umstellen der Bespeisung durch einen Speisewasserverteiler auf zwei oder mehrere Speisewasserverteiler die Bespeisung durch jeden Speisewasserverteiler bei geeignet ausgestalteter Form eine homogene Bespeisung möglich. Auch kann bei einer solchen gestapelten Bauweise der Innenraum des Reaktordruckbehälters in geeigneter Weise ausgenutzt werden.

Um insbesondere den Bodenbereich des Reaktordruckbehälters mit Speisewasser zu versorgen, sind in vorteilhafter Ausgestaltung sämtliche Düsenöffnungen der Auslassdüsen zumindest eines Speisewasserverteilers in Richtung des Bodens des Reaktordruckbehälters gerichtet. Durch eine solche Ausrichtung wird das Speisewasser bevorzugt in Bodenrichtung gelenkt, so dass dieses in besonders geeigneter Weise, insbesondere im flüssigen Zustand, den Bodenbereich erreichen kann. Durch die Düsenausrichtung wird zudem ein temporärer Überdruck im Bodenbereich erzeugt, so dass ein sich einstellender Kreislauf des Speisewassers bzw. des Dampfs, der durch in der Regel sich im oberen Bereich des Reaktordruckbehälters ausgestaltete Entnahmeöffnungen weggeleitet wird, begünstigt.

Um räumlichen Begrenzungen im Reaktordruckbehälter und in den Speisewasserversorgungsleitungen, die zum Reaktordruckbehälter führen, gerecht zu werden, weist das Speisewasserverteilsystem in vorteilhafter Ausgestaltung zwischen einschließlich zwei und einschließlich vier Speisewasserverteiler auf. Da für einen Volllastbetrieb zumindest zwei Speisewasserverteiler vorgesehen sind, andererseits aber die Anzahl an Speisewasserverteilern unter anderem auf Grund von notwendigen Durchführungen, die teilweise Schwachstellen darstellen, durch die Wände des Reaktordruckbehälters limitiert sind, hat sich gezeigt, dass eine Anzahl zwischen zwei und vier Speisewasserverteilern beide Faktoren in geeigneter Weise berücksichtigt.

Insbesondere für die weiter angedachte Auslegung des Speisewasserverteilsystems auch als Notfallsystem weist das Speisewasserverteilsystem in vorteilhafter Ausgestaltung mehr als zwei Speisewasserverteiler auf. Durch eine solche Anzahl an Speisewasserverteilern ist es beispielsweise möglich, in einem Teilllastbetrieb genau einen Speisewasserverteiler und in einem Volllastbetrieb genau zwei Speisewasserverteiler zu nutzen. Bei einem Notfall, der einer verstärkten Kühlung bedarf kann somit zumindest ein weiterer Speisewasserverteiler hinzugeschaltet werden, der ebenfalls in homogener Weise das Speisewasser in den Reaktordruckbehälter einleitet. Auch kann in diesem Fall ein Ausfall von einem der Speisewasserverteiler kompensiert werden.

Um für die Stabilität jedes Speisewasserverteilers zu sorgen und diesen geeignet zu befestigen, weist in vorteilhafter Ausgestaltung jeder Hauptkörper Halteelemente auf, mit denen der Hauptkörper an der Innenwand des Reaktordruckbehälters befestigt ist. Insbesondere durch eine solche Befestigung wird einerseits der modulare Charakter des Speisewasserverteilsystems unterstützt. Beispielsweise können somit bei Defekten nur einzelne Teile ausgetauscht werden. Andererseits wird auch Temperaturunterschieden zwischen Hauptkörper und Innenwand des Reaktordruckbehälters Rechnung getragen, da ein Halteelement in einer weiteren Funktion eine thermische Pufferfunktion ausüben kann.

Um eine symmetrische mechanische Belastung als Folge von Temperaturdifferenzen zwischen verschiedenen Bauteilen im Reaktordruckbehälter zu unterstützen, sind in vorteilhafter Ausgestaltung die Halteelemente am Hauptkörper jedes Speisewasserverteilers symmetrisch um eine Einfüllöffnung im Hauptkörper oder einen Einfüllstutzen angeordnet. Da insbesondere über den Einfüllstutzen oder den mit diesen verbundenen Einfüllöffnungen Wärme transportiert und an die umliegenden Bauteile weitergegeben wird, sollten die Bauteile gleichartig aufgebaut sein, um auch eine gleiche oder zumindest ähnliche Belastung zu erfahren. Da die Verbindung an die Innenwand des Reaktordruckbehälters und damit die Halteelemente einerseits in vielen Fällen Schwachstellen sind und andererseits selbst thermische Verbindungen zwischen Hauptkörper und Innenwand des Reaktordruckbehälters darstellen, sind diese wünschenswerterweise so verteilt, dass mechanische Belastungen gleichmäßig wirken.

Um eine geringe Zahl an Durchführungen durch den Reaktordruckbehälter vorzusehen, weist jeder Speisewasserverteiler in vorteilhafter Ausgestaltung genau einen Einfüllstutzen auf. Durchführungen durch den Reaktordruckbehälter sind einerseits aufwändig und somit mit Kosten verbunden. Andererseits stellen diese oftmals Schwachstellen dar. Insbesondere die Durchleitung von Speisewasser, welches eine andere Temperatur aufweist als die Innenwand des Reaktordruckbehälters, ist mechanischen Belastungen ausgesetzt. Daher ist es wünschenswert die Zahl an Durchführungen klein zu halten. Der Einfüllstutzen grenzt direkt an die Speiseleitung bzw. an die Durchführung an und ist strömungsmäßig mit der oder den Öffnungen im Speisewasserverteiler verbunden, so dass die Verwendung eines Einfüllstutzens als Gegenstück zu einer Durchführung wünschenswert ist. Zudem stellt der Einfüllstutzen eine thermische Verbindung zwischen Hauptkörper und Innenwand des Reaktordruckbehälters dar, wodurch mechanische Spannungen ausgelöst werden können, die vermieden werden können.

Für eine besonders geeignete Verteilung des Speisewassers in dem innenliegenden Kanal des Hauptkörpers weist in vorteilhafter Ausgestaltung jeder Hauptkörper zwei Einfüllöffnungen für den Einfüllstutzen auf. Auf Grund der ringförmigen Ausgestaltung des Hauptkörpers ist eine symmetrische Bespeisung des Hauptkörpers wünschenswert, so dass sich das Speisewasser gleichmäßig in dem innenliegenden Kanal verteilt. Bei einer Einfüllöffnung bedeutet dies, dass idealerweise die Hälfte des eingespeisten Speisewassers sich zu einer Seite des Hauptkörpers hin transportiert und die andere Hälfte zu der anderen Seite des Hauptkörpers hin transportiert wird. Um dies zu erreichen, ist eine symmetrische und bereits in die jeweiligen Richtungen des innenliegenden Kanals gerichtete Bespeisung durch die Einfüllöffnungen eine wirksame Unterstützung. In besonders vorteilhafter Ausgestaltung ist der innenliegende Kanal jedes Hauptkörpers zusätzlich zwischen den beiden Einfüllöffnungen unterbrochen, z. B durch eine Trennwand. Insbesondere durch eine solche Unterbrechung wird das Speisewasser symmetrisch im innenliegenden Kanal verteilt, so dass eine symmetrische Bespeisung des Reaktordruckbehälters begünstigt wird.

Ein Kernreaktor weist in vorteilhafter Ausgestaltung eines der beschriebenen Speisewasserverteilersysteme auf, um beim Betreiben einerseits eine in den meisten Fällen symmetrische Bespeisung des Reaktordruckbehälters zu unterstützen und andererseits eine Redundanz der Komponenten des Speisewasserverteilsystems zu ermöglichen. Bezüglich des Verfahrens zum Betrieben eines Kernkraftwerks wird weiter oben genannte Aufgabe erfindungsgemäß gelöst, indem das Kernkraftwerk eines der beschriebenen Speisewasserverteilsysteme aufweist, bei dem in einem Anfahrbetrieb genau ein Speisewasserverteiler genutzt wird und in einem Volllastbetrieb mehr als ein Speisewasserverteiler genutzt wird.

Durch eine derartige Abfolge ist eine besonders symmetrische Bespeisung des Reaktordruckbehälters unter Berücksichtigung der jeweils notwendigen Menge an Speisewasser erreichbar. Da beim Anfahren und bei Teillastbetrieb des Reaktors eine geringere Menge an Speisewasser notwendig ist, ist nur eine geringere Menge an Speisewasser zu verteilen. Unter Nutzung des Speisewasserverteilsystems ist in einem solchen Betriebsmodus eine besonders effektive Einspeisung durch die Nutzung genau eines Speisewasserverteilers erzielbar. In anderen Betriebsfällen, wie einem Volllastbetrieb, wird eine größere Menge an Speisewasser benötigt, um die Reaktorwärme abzutransportieren. Eine effektive Bereitstellung der Mende an Speisewassers und dessen Verteilung kann durch die Nutzung von zwei Speisewasserverteilern erreicht werden. Da die Speisewasserverteiler von Ihren Dimensionen so ausgelegt werden können, dass eine symmetrische Bespeisung beim Anfahren durch einen Speisewasserverteiler und beim Volllastbetrieb durch zwei Speisewasserverteiler effektiv erfolgt, stellt insbesondere eine solches Verfahren zum Betreiben des Kernkraftwerks eine effektive Nutzung des Systems dar.

Die mit der Erfindung erzielten Vorteile bestehen insbesondere darin, dass durch die Verwendung von zumindest zwei, ringförmigen bzw. torusförmigen Speisewasserverteilern einerseits eine symmetrische Bespeisung eines Reaktordruckbehälters in vielfältigen Betriebsmodi ermöglicht wird. Andererseits weist dieses System durch dessen wiederholte symmetrische Auslegung eine Redundanz auf, die insbesondere dem Sicherheitsgedanken in Kernkraftwerken Rechnung trägt. Auch können mechanische Belastungen, die durch Wärmeübertragung entstehen können und eine Bildung von Rissen im Speisewasserverteilersystem oder dem Reaktordruckbehälter begünstigen können, gemindert werden. Zudem wird auf Grund des modularen Charakters des Systems und seiner Speisewasserverteiler ein Austausch defekter Bauteile erleichtert. Ein Ausführungsbeispiel der Erfindung wird anhand von drei Zeichnungen näher erläutert. Darin zeigen:
- FIG. 1: die Ansicht eines Reaktordruckbehälters, welcher ein Speisewasserverteilsystem aufweist,
- FIG. 2: ein Speisewasserverteilsystem, welches aus zwei Speisewasserverteilern besteht, und
- FIG. 3: zwei übereinander angeordnete, zylindrische Hauptkörper von zwei Speisewasserverteilern im Querschnitt.

Gleiche Teile sind in allen Figuren mit denselben Bezugszeichen versehen.

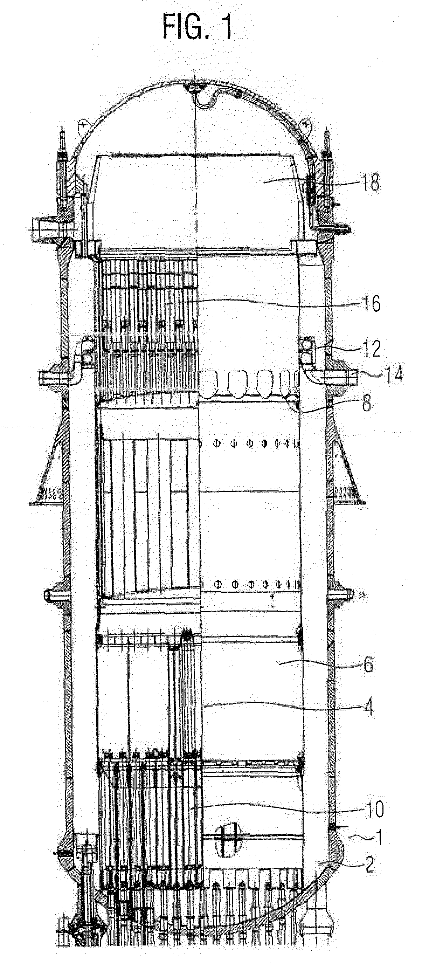

FIG. 1 zeigt einen Reaktordruckbehälter 1, dessen unterer Teilbereich auch als Reaktorboden 2 bezeichnet wird. Im Reaktordruckbehälter 1 befindet sich der Reaktorkern 4, der selbst von einem Kernmantel 6 umgeben ist. Nach oben hin ist der Reaktorkern in der Regel durch eine Kernmantelabdeckung 8 abgedeckt. Der radioaktive Zerfall und damit die entstehende Wärme im Reaktorkern 4 wird durch Steuerstäbe 10 kontrolliert. Das Speisewasser, welches vom Reaktorkern 4 erwärmt wird und zum Abtransport der Wärme dient, wird durch ein Speisewasserverteilsystem 12 in den Reaktordruckbehälter 1 eingespeist. Das Speisewasser wird dabei durch Zuleitungen 14 von außen in den Reaktordruckbehälter 1 hineingebracht und anschließend über das Speisewasserverteilsystem 12 im Reaktordruckbehälter 1 verteilt. Auf Grund der gewählten Anordnung von Speisewasserverteilsystem 12 und Reaktorkern 4 ist es günstig, das Speisewasser vom Speisewasserverteilsystem 12 aus nach unten zu leiten. Dadurch trifft das im Vergleich zum Reaktorkern 4 kühle Speisewasser auf den Reaktorkern 4, wird dort erhitzt, so dass ein Überdruck entsteht, und wird dann über Dampfabscheider 16, die im oberen Bereich des Reaktordruckbehälters 1 angeordnet sind, abgeführt. Der erhitzte Dampf bzw. das Fluid treibt Turbinen an, die sich außerhalb des Reaktordruckbehälters 1 befinden, kondensiert und wird anschließend mittels Pumpen als Speisewasser wieder in den Reaktordruckbehälter 1 eingespeist. Das Speisewasserverteilsystem 12 ist dabei an der Innenwand des Reaktordruckbehälters 1 befestigt.

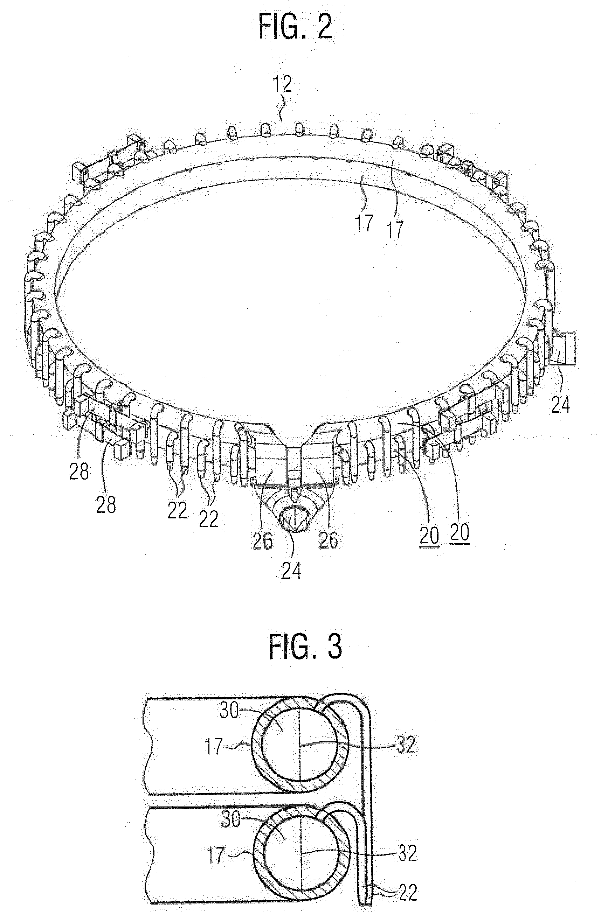

In FIG. 2 ist eine bevorzugte Ausführungsvariante des Speisewasserverteilsystems 12 dargestellt. Dieser umfasst zwei jeweils zum einem 360°-Ring gebogene zylindrische Hauptkörper 17, die jeweils einen innen liegenden Kanal 30 aufweisen. Der innenliegende Kanal 30 ist dabei mit jeder Auslassdüse 22 eines Speisewasserverteilers 20 verbunden. Wird nun Speisewasser über einen Einlassstutzen 24 und über zwei strömungsmäßig mit diesen verbundenen Einlassöffnungen 26 in einen Speisewasserverteiler 20 hineingeleitet, so verteilt sich das Speisewasser gleichmäßig in dem Speisewasserverteiler 20 und strömt durch die Auslassdüsen 22 in den Reaktordruckbehälter 1.

Die beiden im Wesentlichen ring- bzw. torusförmigen Speisewasserverteiler 20 sind dabei in Einbaulage übereinander angeordnet, so dass beide eine ähnliche symmetrische Bespeisung des Reaktordruckbehälters 1 und damit auch des Reaktorkerns 4 bewirken. Durch die gezielte Ausrichtung der Auslassdüsen 22 nach unten, und somit in den Bereich des Reaktorbodens 2 wird insbesondere der Reaktorkern 4 mit Speisewasser versorgt. Durch die Drehung der Einlassstutzen 24 eines jeden Speisewasserverteilers 20 zueinander sind die notwendigen Durchführungen im Reaktordruckbehälter 1 an unterschiedlichen Stellen angeordnet, so dass bei Rissen in Teilbereichen eine Weiterversorgung mit Speisewasser möglich ist. Bei der hier gezeigten Anordnung beträgt der Drehwinkel ungefähr 90, wodurch die Speisewasserversorgung in das Speisewasserverteilsystem 12 durch zwei unabhängig voneinander wirkende Zuführsysteme, die außerhalb des Reaktordruckbehälters 1 angeordnet sind, redundant geschieht.

Die beiden Speisewasserverteiler 20 sind dabei über Halteelemente 28 an der Innenwand des Reaktordruckbehälters 1 befestigt. Dadurch dass unterschiedliche Halteelemente 28 für jeden Speisewasserverteiler 20 genutzt werden, können diese gegeneinander schwimmend gelagert werden. Bei mechanischen Belastungen, die nur auf einen Speisewasserverteiler 20 wirken, wird somit die Belastung nicht an den anderen Speisewasserverteiler 20 weitergegeben. Insbesondere im Bereich der Einlassstutzen 24 und der Einfüllöffnungen 26 entstehen mechanische Belastungen auf Grund der unterschiedlichen Temperaturen der einzelnen Bauteile und des Speisewassers. Insbesondere durch die gezielte modulare Bauweise der einzelnen Speisewasserverteiler 20 wird somit sicherheitsrelevante Redundanz des Speisewasserverteilsystems 12 erreicht.

Auf Grund der Unterbrechung im ringförmigen Hauptkörpers 17 des Speisewasserverteilers 20 im Bereich der beiden Einfüllöffnungen 26 wird eine zielgerichtete Weitergabe des Speisewassers im Hauptkörper 17 erreicht. Idealerweise fließt ungefähr die Hälfte des Speisewassers in einen linken Teilbereich und die andere Hälfte in einen rechten Teilbereich, von wo aus sie über die Auslassdüsen 22 in den Reaktordruckbehälter 1 gespeist werden, so dass eine homogene Verteilung erreicht werden kann.

Für das Betreiben eines Kernkraftwerks kann beim Anfahren des Reaktorkerns 4, bei dem eine geringere Wärmemenge freigesetzt wird als in einem Volllastbetrieb, nur einer der beiden Speisewasserverteiler 20 genutzt werden. Auch in diesem Fall wird das eingespeiste Speisewasser homogen im Reaktordruckbehälter 1 verteilt. Im Volllastbetrieb, bei dem eine größere Menge an Wärme freigesetzt wird und somit eine größere Kühlung notwendig ist, kann der zweite Speisewasserverteiler 20 hinzugeschaltet werden. Auch in diesem Fall ist durch das Speisewasserverteilsystem 12 eine homogene Bespeisung möglich.

In FIG. 3 sind zwei übereinander angeordnete, zylindrische Hauptkörper 17 von zwei Speisewasserverteilern 20 im Querschnitt gezeigt. Durch den innenliegenden Kanal 30 eines jeden zylindrischen Hauptkörpers 17 strömt das Speisewasser, verteilt sich zunächst im jeweiligen zylindrischen Hauptkörper 17 und wird anschließend durch die Auslassdüsen 22 in den Reaktordruckbehälter 1 geleitet, wobei die beiden Speisewasserverteiler 20 unabhängig voneinander wirken.

### Bezugszeichenliste

- 1: Reaktordruckbehälter
- 2: Reaktorboden
- 4: Reaktorkern
- 6: Kernmantel
- 8: Kernmantelabdeckung
- 10: Steuerstab
- 12: Speisewasserverteilsystem
- 14: Zuleitung
- 16: Dampfabscheider
- 17: Hauptkörper
- 20: Speisewasserverteiler
- 22: Auslassdüse
- 24: Einfüllstutzen
- 26: Einfüllöffnung
- 28: Halteelement
- 30: Innenliegender Kanal
- 32: Querschnitt

## Patentansprüche

1. Speisewasserverteilsystem (12) für ein Kernkraftwerk umfassend zumindest zwei innerhalb eines Reaktordruckbehälters (1) angeordnete Speisewasserverteiler (20), wobei jeder Speisewasserverteiler (20)
• genau einen ringförmigen Hauptkörper (17) mit einem innenliegenden Kanal (30) aufweist,
• zumindest einen Einfüllstutzen (24), der strömungsmäßig mit dem innenliegenden Kanal (30) über zumindest eine Einfüllöffnung (26) verbunden ist, aufweist und
• eine Vielzahl von Auslassdüsen (22), die strömungsmäßig mit dem innenliegenden Kanal (30) verbunden sind, aufweist,
und jeder der Einfüllstutzen (24) eines Speisewasserverteilers (20) strömungsmäßig mit jeder Auslassdüse (22) dieses Speisewasserverteilers (20) verbunden ist.

2. Speisewasserverteilsystem (12) nach Anspruch 1, wobei die Auslassdüsen (22) jedes Speisewasserverteilers (20) in Umfangrichtung gesehen gleichmäßig über den Hauptkörper (17) des jeweiligen Speisewasserverteilers (20) verteilt sind.

3. Speisewasserverteilsystem (12) nach Anspruch 1 oder 2, wobei jeder Speisewasserverteiler (20) zwischen vierzig und fünfzig Auslassdüsen (22) aufweist.

4. Speisewasserverteilsystem (12) nach einem der vorhergehenden Ansprüche, wobei der Hauptkörper (17) jedes Speisewasserverteilers (20) im Wesentlichen einen kreisförmigen Querschnitt (32) aufweist.

5. Speisewasserverteilsystem (12) nach einem der vorhergehenden Ansprüche, wobei die Hauptkörper (17) der Speisewasserverteiler (20) übereinander angeordnet sind.

6. Speisewasserverteilsystem (12) nach einem der vorhergehenden Ansprüche, wobei sämtliche Düsenöffnungen der Auslassdüsen (22) zumindest eines Speisewasserverteilers (20) in Richtung des Bodens (2) des Reaktordruckbehälters (1) gerichtet sind.

7. Speisewasserverteilsystem (12) nach einem der vorhergehenden Ansprüche, wobei zwischen einschließlich zwei und einschließlich vier Speisewasserverteiler (20) ausgebildet sind

8. Speisewasserverteilsystem (12) nach einem der vorhergehenden Ansprüche, wobei mehr als zwei Speisewasserverteiler (20) ausgebildet sind.

9. Speisewasserverteilsystem (12) nach einem der vorhergehenden Ansprüche, wobei jeder Hauptkörper (17) durch Halteelemente (28) an der Innenwand des Reaktordruckbehälters (1) befestigt ist.

10. Speisewasserverteilsystem (12) nach Anspruch 9, wobei die Halteelemente (28) am Hauptkörper (17) jedes Speisewasserverteilers (20) symmetrisch um eine Einfüllöffnung (26) im Hauptkörper (17) oder einen Einfüllstutzen (24) angeordnet sind.

11. Speisewasserverteilsystem (12) nach einem der vorhergehenden Ansprüche, wobei jeder Speisewasserverteiler (20) genau einen Einfüllstutzen (24) aufweist.

12. Speisewasserverteilsystem (12) nach Anspruch 11, wobei jeder Hauptkörper (17) zwei Einfüllöffnungen (26) für den Einfüllstutzen (24) aufweist.

13. Speisewasserverteilsystem (12) nach Anspruch 12, wobei der innenliegende Kanal (30) jedes Hauptkörpers (17) zwischen den beiden Einfüllöffnungen (26) unterbrochen ist.

14. Kernreaktor mit einem Speisewasserverteilersystem (12), welches nach einem der vorhergehenden Ansprüche ausgestaltet ist.

15. Verfahren zum Betreiben eines Kernkraftwerks, welches ein Speisewasserverteilsystem (12) nach einem der Ansprüche 1 bis 13 aufweist, bei dem in einem Anfahrbetrieb genau ein Speisewasserverteiler (20) genutzt wird und in einem Volllastbetrieb mehr als ein Speisewasserverteiler (20) genutzt wird.

## Claims

1. A feed-water distributing system (12) for a nuclear power plant, comprising at least two feed-water distributers (20) which are arranged within a reactor pressure vessel (1), wherein each feed-water distributer (20)
• has exactly one annular main body (17) with an inner channel (30),
• has at least one fill socket (24) which is fluidically connected to the inner channel (30) via at least one fill opening (26), and
• has a plurality of outlet nozzles (22) which are fluidically connected to the inner channel (30),
and each of the fill sockets (24) of one feed-water distributer (20) is fluidically connected to each outlet nozzle (22) of said feed-water distributer (20).

2. The feed-water distributing system (12) of claim 1, wherein the outlet nozzles (22) of each feed-water distributer (20), viewed in peripheral direction, are uniformly distributed over the main body (17) of the respective feed-water distributer (20).

3. The feed-water distributing system (12) of claim 1 or 2, wherein each feed-water distributer (20) has between forty and fifty outlet nozzles (22).

4. The feed-water distributing system (12) of any of the preceding claims, wherein the main body (17) of each feed-water distributer (20) has a substantially circular crosssection (32).

5. The feed-water distributing system (12) of any of the preceding claims, wherein the main bodies (17) of the feed-water distributers (20) are arranged one above the other.

6. The feed-water distributing system (12) of any of the preceding claims, wherein all nozzle openings of the outlet nozzles (22) of at least one feed-water distributer (20) are directed towards the bottom (2) of the reactor pressure vessel (1).

7. The feed-water distributing system (12) of any of the preceding claims, wherein from two up to and including four feed-water distributers (20) are formed.

8. The feed-water distributing system (12) of any of the preceding claims, wherein more than two feed-water distributers (20) are formed.

9. The feed-water distributing system (12) of any of the preceding claims, wherein each main body (17) is fastened by means of holding elements (28) on the inner wall of the reactor pressure vessel (1).

10. The feed-water distributing system (12) of claim 9, wherein the holding elements (28) on the main body (17) of each feed-water distributer (20) are symmetrically arranged around a fill opening (26) in the main body (17) or a fill socket (24).

11. The feed-water distributing system (12) of any of the preceding claims, wherein each feed-water distributer (20) has exactly one fill socket (24).

12. The feed-water distributing system (12) of claim 11, wherein each main body (17) has two fill openings (26) for the fill socket (24).

13. The feed-water distributing system (12) of claim 12, wherein the inner channel (30) of each main body (17) is interrupted between the two fill openings (26).

14. A nuclear reactor having a feed-water distributing system (12) which is designed according to any of the preceding claims.

15. A method for operating a nuclear power plant which comprises a feed-water distributing system (12) of any of claims 1 to 13, wherein exactly one feed-water distributer (20) is used in a start-up operation and more than one feed-water distributer (20) is used in a full-load operation.

## Revendications

1. Système de distribution d'eau d'alimentation (12) pour une centrale nucléaire, comprenant au moins deux distributeurs d'eau d'alimentation (20) disposés à l'intérieur d'une cuve sous pression de réacteur (1), dans lequel chaque distributeur d'eau d'alimentation (20)
• présente exactement un corps principal (17) de forme annulaire ayant un conduit intérieur (30),
• présente au moins un tubulure de remplissage (24) qui est reliée fluidiquement au conduit intérieur (30) par au moins un orifice de remplissage (26), et
• présente une pluralité de buses de sortie (22) qui sont reliées fluidiquement au conduit intérieur (30),
et chacune des tubulures de remplissage (24) d'un distributeur d'eau d'alimentation (20) est reliée fluidiquement à chaque buse de sortie (22) du dit distributeur d'eau d'alimentation (20).

2. Système de distribution d'eau d'alimentation (12) selon la revendication 1, dans lequel les buses de sortie (22) de chaque distributeur d'eau d'alimentation (20), vu en direction périphérique, sont distribuées uniformément sur le corps principal (17) du distributeur d'eau d'alimentation (20) respectif.

3. Système de distribution d'eau d'alimentation (12) selon la revendication 1 ou 2, dans lequel chaque distributeur d'eau d'alimentation (20) a entre quarante et cinquante buses de sortie (22).

4. Système de distribution d'eau d'alimentation (12) selon l'une quelconque des revendications précédentes, dans lequel le corps principal (17) de chaque distributeur d'eau d'alimentation (20) a une section (32) transversale essentiellement circulaire.

5. Système de distribution d'eau d'alimentation (12) selon l'une quelconque des revendications précédentes, dans lequel les corps principaux (17) des distributeurs d'eau d'alimentation (20) sont disposés l'un au-dessus de l'autre.

6. Système de distribution d'eau d'alimentation (12) selon l'une quelconque des revendications précédentes, dans lequel tous les orifices des buses de sortie (22) d'au moins un distributeur d'eau d'alimentation (20) sont dirigés vers le fond (2) de la cuve sous pression de réacteur (1).

7. Système de distribution d'eau d'alimentation (12) selon l'une quelconque des revendications précédentes, dans lequel sont formés entre deux et quatre distributeurs d'eau d'alimentation (20) inclusivement.

8. Système de distribution d'eau d'alimentation (12) selon l'une quelconque des revendications précédentes, dans lequel plus de deux distributeurs d'eau d'alimentation (20) sont formés.

9. Système de distribution d'eau d'alimentation (12) selon l'une quelconque des revendications précédentes, dans lequel chaque corps principal (17) est fixé au moyen d'élements de retenue (28) au paroi intérieur de la cuve sous pression de réacteur (1).

10. Système de distribution d'eau d'alimentation (12) selon la revendication 9, dans lequel les éléments de retenue (28) sur trouvant sur le corps principal (17) de chaque distributeur d'eau d'alimentation (20) sont disposés symétriquement autour d'un orifice de remplissage (26) dans le corps principal (17) ou d'une tubulure de remplissage (24).

11. Système de distribution d'eau d'alimentation (12) selon l'une quelconque des revendications précédentes, dans lequel chaque distributeur d'eau d'alimentation (20) présente exactement une tubulure de remplissage (24).

12. Système de distribution d'eau d'alimentation (12) selon la revendication 11, dans lequel chaque corps principal (17) présente deux orifices de remplissage (26) pour la tubulure de remplissage (24).

13. Système de distribution d'eau d'alimentation (12) selon la revendication 12, dans lequel le conduit intérieur (30) de chaque corps principal (17) est interrompu entre les deux orifices de remplissage (26).

14. Réacteur nucléaire ayant un système de distribution d'eau d'alimentation (12) conçu selon l'une quelconque des revendications précédentes.

15. Procédé pour l'exploitation d'une centrale nucléaire qui comprend un système de distribution d'eau d'alimentation (12) selon l'une quelconque des revendications 1 à 13, dans lequel exactement un distributeur d'eau d'alimentation (20) est utilisé dans un régime de démarrage et plus d'un distributeur d'eau d'alimentation (20) est utilisé dans un régime de pleine charge.
